# EUROPÄISCHE PATENTSCHRIFT

(11) **EP 4 794 945 B1**
(45) Veröffentlichungstag und Bekanntmachung des Hinweises auf die Patenterteilung: **14.10.2026**
(21) Anmeldenummer: 25702741.7
(22) Anmeldetag: 27.01.2025
(51) Int. Cl.: B60W 30/095, B60W 30/18, B60W 50/14, B60W 40/04, B60W 50/00

(54) **SICHERHEITSPRÜFUNG EINES FAHRZEUG-SPURWECHSELS MIT ABGESTUFTEN SENSORSICHTWEITEN**
VEHICLE LANE CHANGE SAFETY CHECK WITH GRADED SENSOR VISIBILITY RANGES
VÉRIFICATION DE SÉCURITÉ DE CHANGEMENT DE VOIE DE VÉHICULE AVEC PLAGES DE VISIBILITÉ DE CAPTEUR GRADUÉES

(30) Priorität: 02.02.2024 DE 102024000335
(43) Veröffentlichungstag der Anmeldung: 26.08.2026
(73) Patentinhaber: Mercedes-Benz Group AG, 70372 Stuttgart (DE)
(72) Erfinder: KÄFER, Eugen, 71272 Renningen (DE)
(74) Vertreter: Novagraaf Group
(86) Internationale Anmeldenummer: PCT/EP2025/051936
(87) Internationale Veröffentlichungsnummer: WO 2025/162863

(56) Entgegenhaltungen:
- EP-A1- 3 552 898
- DE-A1- 102013 226 773
- US-A1- 2019 185 005
- US-A1- 2020 324 776

## Beschreibung

Die Erfindung betrifft ein System für ein Fahrzeug zum Überprüfen eines möglichen Spurwechsels auf Sicherheit, sowie ein Fahrzeug mit einem solchen System.

Insbesondere auf einer Autobahn mit zumindest einer Richtungsfahrbahn, die zwei oder mehr parallele Fahrspuren mit gleicher Fahrtrichtung aufweist, ist bei einem Überholvorgang durch ein Fahrzeug von einer tendenziell langsameren auf eine tendenziell schnellere Spur zumindest vorübergehend zu wechseln. Dabei ist im Betrieb des Fahrzeugs darauf zu achten, dass auf der tendenziell schnelleren Spur ausreichend Abstand zu einem hinter dem eigenen Fahrzeug nachfolgenden Verkehrsteilnehmer besteht. Dieser Abstand sollte insbesondere abhängig von der Geschwindigkeitsdifferenz zwischen dem nachfolgenden Verkehrsteilnehmer und dem eigenen Fahrzeug sein, sodass ein Abbremsen des nachfolgenden Verkehrsteilnehmers als Reaktion auf das Ausscheren des eigenen Fahrzeugs möglichst vermieden wird. Die zu beachtende Abhängigkeit des Abstands von der Geschwindigkeit rührt daher, dass mit niedrigerem Abstand und höherer Geschwindigkeit des nachfolgenden Verkehrsteilnehmers zum eigenen Fahrzeug die Zeit bis zum Erreichen des eigenen Fahrzeugs durch den nachfolgenden Verkehrsteilnehmer für einen gegebenen Abstand zueinander kürzer wird.

Dieser Zusammenhang ist von einem menschlichen Fahrer bei einer manuellen Fahrzeugführung zu berücksichtigen. Ebenso ist dieser Umstand zu berücksichtigen, wenn hochautomatisierte Fahrzeuge entwickelt und ausgelegt werden, welche in der Lage sind, einen solchen Überholvorgang wie oben beschrieben selbstständig, d. h. durch maschinelle Führung, auszuführen.

Wie auch die Sichtbarkeit nach hinten gegen die Hauptfahrtrichtung auf schnell herannahende Verkehrsteilnehmer in ausreichender Entfernung beim manuellen Fahren häufig ein limitierender Faktor in der optimalen Ausführung dieser Prinzipien ist, so sind auch bei automatisierten Fahrzeugen Sensoren mit nur begrenzter Reichweite verfügbar. Die gewünschten Reichweiten überschreiten die Möglichkeiten der Sensorsysteme heutzutage. Im Stand der Technik sind Methoden bekannt, um einen solchen Kurswechsel eines Fahrzeugs für einen manuellen Fahrer zu vereinfachen:
Die DE 10 2013 226 773 A1 betrifft in diesem Zusammenhang eine Vorrichtung zum Unterstützen eines Kurswechsels eines Fahrzeugs, mit folgenden Merkmalen: eine Erfassungseinrichtung zum Erfassen eines Abstands sowie einer Geschwindigkeit wenigstens eines zu dem Fahrzeug rückwärtigen Fahrzeugs; und eine Anzeigeeinrichtung zum Anzeigen eines Hinweises auf den erfassten Abstand und die erfasste Geschwindigkeit des rückwärtigen Fahrzeugs.

In der EP 3 552 898 A1 wird eine Vorrichtung zur Steuerung eines Spurwechsels beschrieben. Nach Erhalt eines Spurwechselbefehls berechnet die Vorrichtung eine für einen sicheren Spurwechsel erforderliche Mindestbetriebsgeschwindigkeit. Ist die aktuelle Fahrgeschwindigkeit niedriger als diese Mindestgeschwindigkeit, entscheidet das System, ob es beschleunigen soll. Diese Entscheidung basiert auf der Geschwindigkeit eines vorausfahrenden Fahrzeugs auf derselben Fahrspur und dem Kollisionsrisiko. Je nach Situation wird das Fahrzeug entweder beschleunigt, um den Spurwechsel durchzuführen, oder zunächst verlangsamt.

Die US 2020/0324776 A1 beschreibt eine Spurwechsel-Unterstützungsvorrichtung, die insbesondere für den Fall einer erkannten Anomalie des Fahrers (z.B. ein medizinischer Notfall) ausgelegt ist. Das System definiert verschiedene Zonen, darunter einen "Zulassungsbereich für ein hinteres Schutzfahrzeug" ("rear guard vehicle approval range") in der Zielspur. Ein Spurwechsel wird dann als möglich erachtet, wenn unter anderem ein nachfolgendes Fahrzeug in der Zielspur für eine bestimmte Zeit in diesem "Schutzbereich" verweilt. Dieses Fahrzeug fungiert als "Schutzschild" oder "Blocker" gegenüber schnellerem Verkehr von hinten und schafft so einen sicheren Raum für einen automatischen Spurwechsel des eigenen Fahrzeugs.

Die US 2019/0185005 A1 offenbart eine Unterstützungsvorrichtung für einen Spurwechsel. Das System identifiziert eine Fahrzeuglücke in der benachbarten Fahrspur als potenziellen Zielbereich. Es berechnet einen erforderlichen Sicherheitsabstand und ermittelt eine Wartezeit sowie eine "Zielgeschwindigkeit". Nach Ablauf der Wartezeit passt das System die Geschwindigkeit des eigenen Fahrzeugs an die Zielgeschwindigkeit an, um sich dem Verkehrsfluss in der Zielspur anzugleichen, bevor der Spurwechsel ausgeführt wird. Dies soll einen sanften und komfortablen Spurwechsel ermöglichen.

Es ist Aufgabe der Erfindung, die Anforderungen an ein Sensorsystem zur Verwendung durch ein automatisiertes Fahrzeug in einem Überhol-Szenario wie beschrieben mit parallelen Fahrspuren zu entlasten und mittels einer neuen Fahrstrategie ein solches Szenario besser handhaben zu können.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein System für ein Fahrzeug zum Überprüfen eines möglichen Spurwechsels auf Sicherheit, aufweisend eine Sensoreinheit und eine Recheneinheit, wobei die Sensoreinheit zum Erfassen von Verkehrsteilnehmern und zum Übermitteln von Daten der Erfassung an die Recheneinheit ausgeführt ist, dadurch gekennzeichnet, dass die Recheneinheit dazu ausgeführt ist, basierend auf den Daten der Sensoreinheit zu beurteilen, ob sich ein jeweiliger erfasster Verkehrsteilnehmer in einem ersten Bereich oder in einem zweiten Bereich befindet, wobei der erste Bereich näher am Fahrzeug liegt als der zweite Bereich und sowohl der erste Bereich als auch der zweite Bereich in einem entgegen der Fahrtrichtung des Fahrzeugs befindlichen Gebiet liegen, und dazu, einen Abstand des jeweiligen Verkehrsteilnehmers zum eigenen Fahrzeug und eine Geschwindigkeit des jeweiligen Verkehrsteilnehmers zu ermitteln, wenn sich der erfasste Verkehrsteilnehmer im ersten Bereich befindet, sowie dazu, einen sicheren Spurwechsel zu erkennen, wenn kein Verkehrsteilnehmer im zweiten Bereich erfasst wird und alle im ersten Bereich erfassten Verkehrsteilnehmer jeweils eine als sicher eingestufte Kombination aus Geschwindigkeit und Abstand zum eigenen Fahrzeug aufweisen, und einen sicheren Spurwechsel zu verneinen, wenn sich zumindest ein Verkehrsteilnehmer im ersten Bereich befindet, der eine als unsicher eingestufte Kombination aus Geschwindigkeit und Abstand zum eigenen Fahrzeug aufweist.

Das System wird insbesondere vorteilhaft eingesetzt, wenn ein Fahrzeug mit dem System auf einer Richtungsfahrbahn mit zwei oder mehr parallelen Fahrspuren gleicher Fahrtrichtung unterwegs ist, beispielsweise auf einer Autobahn. Vorteilhaft ist das System vollständig im eigenen Fahrzeug integriert, insbesondere ist am Fahrzeug eine Sensoreinheit angeordnet, die mit ihrem Erfassungsbereich gegen die Hauptfahrtrichtung des Fahrzeugs nach hinten ausgerichtet ist, um von hinten, d. h. rückwärtige, sich nähernde Verkehrsteilnehmer erfassen zu können. Aber auch auf Straßen mit nur einer Fahrspur je Fahrtrichtung kann das System vorteilhaft eingesetzt werden, um bereits überholende und sich von hinten nähernde Verkehrsteilnehmer zu erkennen und einschätzen zu können.

Grundlage der Entscheidung, ob ein möglicher Spurwechsel als sicher eingestuft wird, ist die Überprüfung einer Kombination eines Abstands zwischen dem sich von hinten nähernden Verkehrsteilnehmer und dem eigenen Fahrzeug, sowie eine Geschwindigkeit des Verkehrsteilnehmers. Die Geschwindigkeit des Verkehrsteilnehmers kann eine absolute Geschwindigkeit sein, bevorzugt wird jedoch eine relative Geschwindigkeit des Verkehrsteilnehmers relativ zu der des eigenen Fahrzeugs mit einem solchen System betrachtet, da diese abhängig vom aktuellen Abstand zwischen Verkehrsteilnehmer und eigenem Fahrzeug eine Zeit bestimmt, nach der der Verkehrsteilnehmer das eigene Fahrzeug erreicht hat, sofern er seine Geschwindigkeit beibehält.

Bevorzugt wird zur Entscheidungsfindung eine vorgegebene Logik verwendet, die den Abstand und die relative Geschwindigkeit zwischen Verkehrsteilnehmer und Fahrzeug berücksichtigt, beispielsweise indem die oben beschriebene geschätzte Zeit bis zum Aufeinandertreffen mit einem vorgegebenen Grenzwert verglichen wird. Es können auch komplexere Metriken angewendet werden und in Form einer Tabelle oder analytisch lösbaren Gleichungen angewendet werden.

Da jedoch davon auszugehen ist, dass die Sensoreinheit des Systems nur eine begrenzte Reichweite aufweist, um den relativen Abstand eines jeweiligen durch sie erfassten Verkehrsteilnehmers zum Fahrzeug mit dem System sowie die Geschwindigkeit des Verkehrsteilnehmers ausreichend korrekt erfassen zu können, wird ein erster Bereich definiert, innerhalb dessen Abstand und Geschwindigkeit des Verkehrsteilnehmers verwendet wird. Es hat sich jedoch herausgestellt, dass die grundsätzliche Existenz des weiteren Verkehrsteilnehmers jedoch auch schon in größeren Entfernungen detektiert werden kann. Zu diesem Zweck wird ein zweiter Bereich definiert, der sich hinter den ersten Bereich anschließt. Bevorzugt sind der zweite Bereich und der erste Bereich jeweils seitlich auf die seitliche Erstreckung der Richtungsfahrbahn mit den mehreren parallelen gleichgerichteten Fahrspuren beschränkt, um Fehldetektionen von anderen Objekten, die fälschlicherweise als Verkehrsteilnehmer eingeordnet werden, möglichst zu vermeiden.

Befindet sich der Verkehrsteilnehmer im zweiten Bereich, d. h. in größerer Entfernung zum eigenen Fahrzeug, als noch um in den ersten Bereich zu fallen, kann dieser detektiert werden mithilfe der Sensoreinheit, die für diesen Fall mit geringeren Anforderungen betrieben werden kann, als für einen im ersten Bereich erfassten Verkehrsteilnehmer. Dennoch können Erkennungen der Sensoreinheit ausgenutzt werden, ohne exakte Informationen über den Verkehrsteilnehmer einholen zu müssen. Vielmehr zählt alleine die Objekterkennung an sich, d. h. Tatsache, dass eine Existenz eines Verkehrsteilnehmers im zweiten Bereich erkannt werden kann. Durch die Anwendung einer Kamera-Perzeption beispielsweise werden zur Objekt-Detektion für einen Verkehrsteilnehmer im zweiten Bereich weniger Pixel benötigt, als die Schätzung der Geschwindigkeit und gegebenenfalls der Objektklasse und weiterhin gegebenenfalls der Objektgröße eines Verkehrsteilnehmers im ersten Bereich benötigt.

Werden nur Verkehrsteilnehmer im ersten Bereich erkannt, die eine jeweilige Kombination aus Geschwindigkeit und Abstand zum eigenen Fahrzeug aufweisen, die als sicher im Bezug auf einen im Zeitpunkt der Einstufung initiierten Spurwechsel eingestuft werden, kann ein Spurwechsel im Falle eines automatisierten Fahrzeugs initiiert werden, oder eine Warnung im Falle eines manuell geführten Fahrzeugs unterbleiben. Weist zumindest ein Verkehrsteilnehmer im ersten Bereich eine als unsicher eingestufte Kombination aus Abstand und Geschwindigkeit zum eigenen Fahrzeug auf, so wird der Spurwechsel im Falle eines automatisierten Fahrzeugs nicht initiiert, und im Falle eines manuell geführten Fahrzeugs eine Warnung ausgegeben. Da die Möglichkeit besteht, dass außerhalb des ersten Bereichs sich ein Verkehrsteilnehmer dem eigenen Fahrzeug mit sehr hoher Geschwindigkeit nähert, und kurz davor ist, in den ersten Bereich einzutreten, wird ein sicherer Spurwechsel nur dann erkannt, wenn sich kein Verkehrsteilnehmer im zweiten Bereich befindet.

Damit kann die Ermittlung eines sicheren Spurwechsels in solchen gefährlichen Situationen vermieden werden, in denen zwar im ersten Bereich sämtliche Verkehrsteilnehmer ausreichend Abstand und ausreichend geringe Geschwindigkeit relativ zum eigenen Fahrzeug aufweisen, ein sich sehr schnell annähernder Verkehrsteilnehmer von hinten außerhalb des ersten Bereichs jedoch beim Ausführen des Spurwechsels eine tatsächliche Gefahr darstellt.

Ist weder im ersten Bereich noch im zweiten Bereich ein Verkehrsteilnehmer detektiert worden, so wird ebenfalls ein sicherer Spurwechsel erkannt. Vorteilhaft wird weiterhin von der Recheneinheit der erste Bereich und der zweite Bereich auf benachbarte Fahrspuren begrenzt, von denen eine durch das Fahrzeug mit einem solchen System befahren wird.

Gemäß einer vorteilhaften Ausführungsform ist die Recheneinheit dazu ausgeführt, in dem Fall, dass zumindest ein Verkehrsteilnehmer im zweiten Bereich erfasst wird, einen sicheren Spurwechsel zu verneinen und dessen Erkennung erst dann wieder zuzulassen, sobald dieser Verkehrsteilnehmer den zweiten Bereich verlassen hat und zu diesem Zeitpunkt alle im ersten Bereich erfassten Verkehrsteilnehmer jeweils eine als sicher eingestufte Kombination aus Geschwindigkeit und Abstand zum eigenen Fahrzeug aufweisen.

Hierbei wird abgewartet, bis ein im zweiten Bereich befindlicher Verkehrsteilnehmer in den ersten Bereich eingetreten ist, um dort dessen Abstand und Geschwindigkeit relativ zum eigenen Fahrzeug überprüfen zu können. Auch alle anderen Verkehrsteilnehmer im ersten Bereich müssen eine entsprechende sichere Kombination aus Abstand und Geschwindigkeit zum eigenen Fahrzeug aufweisen. Erst wenn dies erfüllt ist und kein Verkehrsteilnehmer im zweiten Bereich befindlich ist, kann ein sicherer Spurwechsel demnach erkannt werden.

Gemäß einer weiteren vorteilhaften Ausführungsform wird die Bedingungslogik zum Überprüfen der Kombination eines Abstands und einer Geschwindigkeit eines Verkehrsteilnehmers im zweiten Bereich dynamisch angepasst, beispielsweise abhängig von der Geschwindigkeit des eigenen Fahrzeugs, von Wetterverhältnissen, von Straßenverhältnissen, von einer Masse des eigenen Fahrzeugs, einer Zuladung des eigenen Fahrzeugs, einer aktuellen Motorisierung des eigenen Fahrzeugs, einem Ladezustand der Batterie des eigenen Fahrzeugs.

Gemäß einer weiteren vorteilhaften Ausführungsform ist die Recheneinheit dazu ausgeführt, einen Verkehrsteilnehmer im zweiten Bereich lediglich aufgrund einer Bewegung des Verkehrsteilnehmers als solchen zu erkennen, ohne dessen Geschwindigkeit zum eigenen Fahrzeug zu ermitteln.

Weist die Sensoreinheit eine Kamera auf, so kann der Verkehrsteilnehmer im zweiten Bereich mit einer relativ geringen Anzahl von Pixeln erkannt werden, indem er als sich bewegendes Objekt im zweiten Bereich identifiziert wird. Eine genaue Geschwindigkeitsmessung dieses Verkehrsteilnehmers sowie eine genaue Abstandsmessung zum eigenen Fahrzeug ist dabei nicht nötig, und unter Umständen nicht genau möglich.

Gemäß einer weiteren vorteilhaften Ausführungsform ist die Recheneinheit dazu ausgeführt, bei einem erkannten sicheren Spurwechsel durch Ansteuerung einer Ausgabeeinheit des Systems keine Warnung an einen Fahrer des Fahrzeugs auszugeben und/oder das automatische Einleiten eines Spurwechsels durchzuführen, und bei einem verneinten sicheren Spurwechsel eine Warnung an den Fahrer auszugeben und/oder das automatische Einleiten des Spurwechsels zu verhindern.

Gemäß einer weiteren vorteilhaften Ausführungsform umfasst die Warnung an den Fahrer des Fahrzeugs mehrere Warnstufen, wobei die Recheneinheit dazu ausgeführt ist, eine Warnstufe abhängig von der Einstufung eines Spurwechsels in sicher oder unsicher und abhängig von dem ermittelten Abstand eines Verkehrsteilnehmers zum eigenen Fahrzeug und/oder der ermittelten Geschwindigkeit des Verkehrsteilnehmers zu ermitteln.

Gemäß einer weiteren vorteilhaften Ausführungsform ist die Recheneinheit dazu ausgeführt, eine jeweilige Abmessung zumindest eines sich im ersten Bereich befindlichen jeweiligen Verkehrsteilnehmers aus den Daten der Sensoreinheit zu ermitteln, und die für einen sicheren Spurwechsel erforderliche Kombination aus Geschwindigkeit und Abstand an die jeweils ermittelte Abmessung dynamisch anzupassen.

Die ermittelte Abmessung kann dabei verwendet werden, um die Erstreckung des ersten Bereichs und somit die Positionierung des zweiten Bereichs anzupassen, sowie um eine Bedingung anzupassen, ob ein Abstand und eine Geschwindigkeit des Verkehrsteilnehmers relativ zum eigenen Fahrzeug eine sichere Kombination darstellen.

Gemäß einer weiteren vorteilhaften Ausführungsform grenzt der zweite Bereich nahtlos an den ersten Bereich an.

Gemäß einer weiteren vorteilhaften Ausführungsform ist die Recheneinheit dazu ausgeführt, abhängig von einem aktuellen Zustand eines vorgegebenen Situationsparameters eine Erstreckung des ersten Bereichs und/oder eine Erstreckung des zweiten Bereichs anzupassen.

Ein möglicher Situationsparameter ist eine Zustandsgröße des aktuell vorliegenden Wetters. Ein weiterer möglicher Situationsparameter ist die Geschwindigkeit des eigenen Fahrzeugs.

Gemäß einer weiteren vorteilhaften Ausführungsform ist die Recheneinheit dazu ausgeführt, eine Erstreckung des ersten Bereichs wetterbedingt anzupassen.

Gemäß einer weiteren vorteilhaften Ausführungsform ist die Recheneinheit dazu ausgeführt, beim Befahren eines vorgegebenen Streckenabschnitts die Definition des zweiten Bereichs zu verwerfen und bei der Überprüfung eines möglichen Spurwechsels auf Sicherheit lediglich den ersten Bereich zu verwenden.

Ein solcher vorgegebener Streckenabschnitt oder Streckenabschnitt vorgegebener Kategorie kann eine Landstraße sein. Auf Landstraßen kann die Verwendung eines zweiten Bereichs unter Umständen entfallen, da typischerweise die Reichweite der Sensoreinheit im Vergleich zu den Straßenverhältnissen ausreichend ist und keine großen Relativgeschwindigkeiten zu erwarten sind.

Ein weiterer Aspekt der Erfindung betrifft ein Fahrzeug mit einem System wie oben und im Folgenden beschrieben.

Vorteile und bevorzugte Weiterbildungen des vorgeschlagenen Fahrzeugs ergeben sich durch eine analoge und sinngemäße Übertragung der im Zusammenhang mit dem vorgeschlagenen System vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein

Ausführungsbeispiel im Einzelnen beschrieben ist. Gleiche, ähnliche und/oder funktionsgleiche Teile sind mit gleichen Bezugszeichen versehen.

Es zeigen:
- Fig. 1:: Eine Straßenverkehrssituation auf einer Richtungsfahrbahn mit zwei parallelen Fahrspuren gleicher Fahrtrichtung unter Anwendung eines Systems zur Überprüfung der Sicherheit eines Spurwechsels gemäß dem Stand der Technik.
- Fig. 2:: Eine Straßenverkehrssituation auf einer Richtungsfahrbahn mit zwei parallelen Fahrspuren gleicher Fahrtrichtung unter Anwendung eines Systems zur Überprüfung der Sicherheit eines Spurwechsels gemäß einem Ausführungsbeispiel der Erfindung.
- Fig. 3:: Ein Fahrzeug mit einem System gemäß einem Ausführungsbeispiel der Erfindung.

Die Darstellungen in den Figuren sind schematisch und nicht maßstäblich.

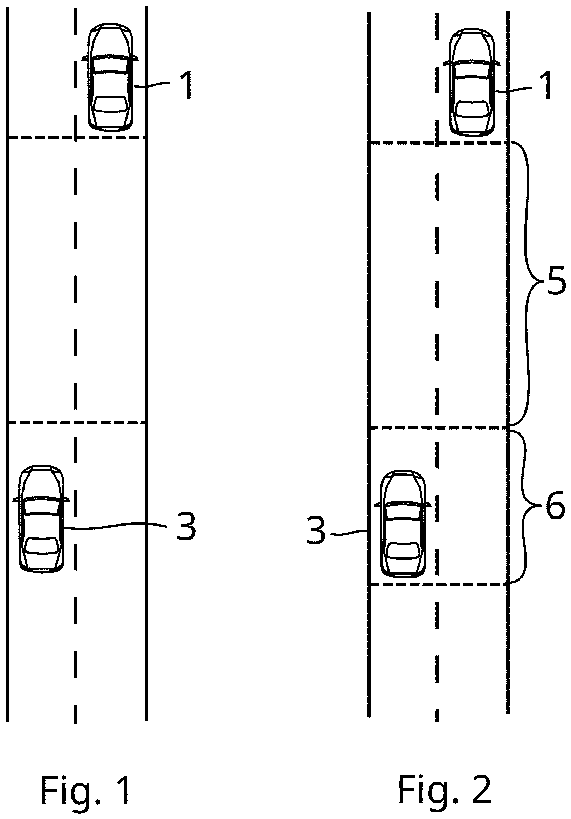

Fig. 1 zeigt eine Situation im öffentlichen Straßenverkehr auf einer Richtungsfahrbahn mit zwei parallelen Fahrspuren gleicher Fahrtrichtung, d. h. eine Richtungsfahrbahn einer Autobahn. In dieser Situation ist ein Fahrzeug 1 auf der rechten Fahrspur unterwegs und ist mit einem System zum Warnen vor einem Spurwechsel wegen zu hoher Unsicherheit nach dem Stand der Technik ausgestattet. Dieses System ermittelt den Abstand und die relative Geschwindigkeit zwischen dem Verkehrsteilnehmer 3 und dem eigenen Fahrzeug 1 mittels einer sensorisch. Durch eine vorgegebene Bedingungslogik wird ermittelt, ob der Abstand vor dem Hintergrund der relativen Geschwindigkeit zwischen dem Verkehrsteilnehmer 3 und dem eigenen Fahrzeug 1 ausreichend ist, um einen sicheren Spurwechsel angeben zu können. Der Abstand der Geschwindigkeit des weiteren Verkehrsteilnehmers 3 wird mittels eines Sensors ermittelt, der naturgemäß eine begrenzte Reichweite aufweist. Diese Reichweite ist auf den Abschnitt der Richtungsfahrbahn, welcher zwischen zwei horizontal gezeichnet gestrichelten Linien angedeutet ist, wirksam begrenzt. Der Verkehrsteilnehmer 3 in der Fig. 1 befindet sich außerhalb dieser Reichweite, weshalb er in diesem System nach dem Stand der Technik bezüglich seines Abstands zum eigenen Fahrzeug 1 und seiner relativen Geschwindigkeit dazu nicht analysiert wird. Weist der Verkehrsteilnehmer 3 jedoch eine sehr hohe Geschwindigkeit auf, beispielsweise von 300 km/h, während das eigene Fahrzeug kurz nach dem Verlassen einer Einfahrt oder dem Folgen eines langsamen Lastkraftwagens beispielsweise eine Geschwindigkeit von 80 km/h aufweist, können gefährliche Situationen bei Ausführung eines Spurwechsels durch das eigene Fahrzeug 1 entstehen, bei der der Verkehrsteilnehmer 3 zur Unfallvermeidung stark abbremsen muss.

Fig. 2 zeigt dagegen ein beispielhaftes erfindungsgemäßes System, welches im Fahrzeug 1 verbaut ist, um eine gefährliche Situation wie in Fig. 1 skizziert zu vermeiden: Zwar ist immer noch die Reichweite einer Sensoreinheit 2 des Systems des eigenen Fahrzeugs 1 auf einen ersten Bereich 5 begrenzt, innerhalb dessen ein Abstand eines Verkehrsteilnehmers 3 zum eigenen Fahrzeug 1 und die relative Geschwindigkeit des weiteren Verkehrsteilnehmers 3 relativ zum eigenen Fahrzeug 1 ermittelt werden kann; außerhalb des ersten Bereichs 5 jedoch nicht, zumindest nicht zuverlässig. Der sich hinter dem ersten Bereich 5 angrenzende zweite Bereich 6 kann zwar noch mit der Sensoreinheit 2 erfasst werden, es kann jedoch nicht oder nicht zuverlässig der Abstand die relative Geschwindigkeit des weiteren Verkehrsteilnehmers 3 zum eigenen Fahrzeug 1 ermittelt werden. Dennoch kann mittels Bilderkennung oder anderer Sensormetrik grundsätzlich erkannt werden, dass sich ein weiterer Verkehrsteilnehmer 3 in diesem zweiten Bereich 6 befindet, da er in den Daten der Sensoreinheit 2 nach Auswertung durch die Recheneinheit 4 als bewegendes Objekt im zweiten Bereich 6 identifiziert werden kann. Abmessungen und kinematische Daten des Verkehrsteilnehmers 3 sind wegen der beschränkten genauen Sensorreichweite der Sensoreinheit 2 dabei noch nicht ermittelbar. Daher führt die Recheneinheit 4 des Systems des ersten Fahrzeugs 1 folgende Logik durch:
Wird eine Verkehrsteilnehmer 3 im zweiten Bereich 6 erkannt, so wird davon ausgegangen, dass sich noch nicht zuverlässig dessen Geschwindigkeit und sein exakter Abstand zum eigenen Fahrzeug 1 ermitteln lässt. Es wird daher gewartet, bis der Verkehrsteilnehmer 3 den zweiten Bereich 6 verlässt und in den ersten Bereich 5 einfährt. Angekommen im ersten Bereich 5 ist vom Verkehrsteilnehmer 3 ein exakter relativer Abstand zwischen ihm und dem eigenen Fahrzeug 1 sowie eine relative Geschwindigkeit zwischen dem Verkehrsteilnehmer 3 und dem eigenen Fahrzeug 1 ermittelbar. Mit diesen Informationen kann konventionell ausgewertet werden, ob dessen aktuelle Geschwindigkeit und dessen aktueller Abstand zum eigenen Fahrzeug 1 eine Kombination darstellen, die den Schluss eines sicheren Spurwechsels des eigenen Fahrzeugs 1 von der rechten Fahrspur auf die linke Fahrspur zulassen. Übersteigt ein abstandsabhängiger Grenzwert für die Geschwindigkeit oder alternativ ein geschwindigkeitsabhängiger Grenzwert des Abstands eine jeweilige Grenzbedingung, so wird von einem unsicheren Spurwechsel ausgegangen und im Falle einer manuellen Fahrzeugführung eine Warnung an den Fahrer des eigenen Fahrzeugs 1 ausgegeben. Handelt es sich um ein hochautomatisiertes Fahrzeug 1, welches dazu in der Lage ist, selbstständig und ohne menschliches Zutun den Spurwechsel beispielsweise zum Zwecke eines Überholvorgangs eines vorausfahrenden Lastkraftwagens durchzuführen, so wird von der Recheneinheit 4 der automatische Spurwechsel unterbunden. Andernfalls kann eine Warnung an den Fahrer entfallen bzw. ein vollautomatischer Spurwechsel durchgeführt werden. Wird erkannt, dass sich ein Verkehrsteilnehmer 3 im zweiten Bereich 6 befindet, dieser jedoch nach einer gewissen Zeit in den ersten Bereich 5 einfährt, so kann davon ausgegangen werden, dass der Verkehrsteilnehmer 3 eine entsprechend langsame Geschwindigkeit aufweist und keine Gefahr für einen sicheren Spurwechsel für das eigene Fahrzeug 1 darstellt. Eine solche Option kann in der Recheneinheit 4 zusätzlich verbaut werden. Die Grenzen zwischen dem ersten Bereich 5 und dem zweiten Bereich 6 können zudem flexibel ausgeführt sein, beispielsweise wetterabhängig und insbesondere abhängig von einer aktuellen maximalen Sichtweite. Wettereinflüsse wie Nebel können nicht nur die menschliche Sichtweite begrenzen, sondern auch insbesondere die von Sensoren einer Sensoreinheit 2 des eigenen Fahrzeugs 1, wie beispielsweise eine Ultraschall-Abstandseinheit, in gewissen Maßen Radarwellen, und insbesondere eine Kameraeinheit. Demnach können die Grenzen des ersten Bereichs 5 entsprechend des verringerten Detektionsbereichs verkleinert werden. Auch können die Gegebenheiten des Fahrbahnzustands berücksichtigt werden. Weiterhin kann die Ausdehnung des ersten Bereichs 5 und damit die Positionierung des sich anschließenden zweiten Bereichs 6 abhängig von der Geschwindigkeit des eigenen Fahrzeugs 1 dynamisch definiert werden.

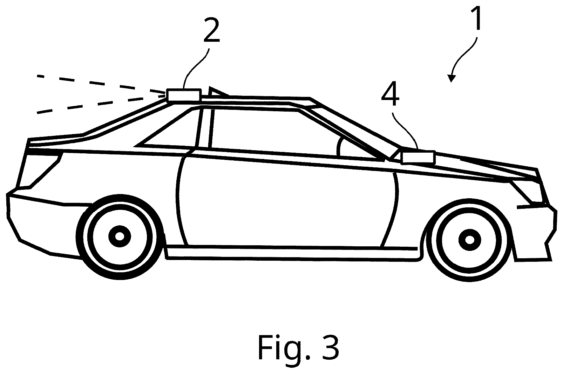

Fig. 3 zeigt ein Fahrzeug 1, welches mit einem System ausgerüstet ist, dass zum Überprüfen eines möglichen Spurwechsels auf Sicherheit ausgestattet ist. Eine nach hinten gerichtete Sensoreinheit 2 weist zumindest eine Kamera auf, um hinter dem eigenen Fahrzeug 1 fahrende Verkehrsteilnehmer 3 detektieren zu können und um eine Zuordnung der in einer Recheneinheit 4 des Fahrzeugs 1 abgelegten Definition eines ersten Bereichs 5 und eines zweiten Bereichs 6 in einem Gebiet entgegen der Fahrtrichtung des Fahrzeugs 1 zu ermöglichen. Die Recheneinheit 4 ist in der Fig. 3 beispielhaft im Fahrzeug 1 angeordnet gezeichnet, kann jedoch auch als zentrale Recheneinheit stationär ausgeführt werden und für eine Vielzahl von Fahrzeugen 1 verwendet werden.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den durch die angehängten Patentansprüche bestimmten Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

## Patentansprüche

1. System für ein Fahrzeug (1) zum Überprüfen eines möglichen Spurwechsels auf Sicherheit, aufweisend eine Sensoreinheit (2) und eine Recheneinheit (4), wobei die Sensoreinheit (2) zum Erfassen von Verkehrsteilnehmern (3) und zum Übermitteln von Daten der Erfassung an die Recheneinheit (4) ausgeführt ist, **dadurch gekennzeichnet, dass** die Recheneinheit (4) dazu ausgeführt ist, basierend auf den Daten der Sensoreinheit (2) zu beurteilen, ob sich ein jeweiliger erfasster Verkehrsteilnehmer (3) in einem ersten Bereich (5) oder in einem zweiten Bereich (6) befindet, wobei der erste Bereich (5) näher am Fahrzeug (1) liegt als der zweite Bereich (6) und sowohl der erste Bereich (5) als auch der zweite Bereich (6) in einem entgegen der Fahrtrichtung des Fahrzeugs (1) befindlichen Gebiet liegen, und dazu, einen Abstand des jeweiligen Verkehrsteilnehmers (3) zum Fahrzeug (1) und eine Geschwindigkeit des jeweiligen Verkehrsteilnehmers (3) zu ermitteln, wenn sich der erfasste Verkehrsteilnehmer (3) im ersten Bereich (5) befindet, sowie dazu, einen sicheren Spurwechsel zu erkennen, wenn kein Verkehrsteilnehmer (3) im zweiten Bereich (6) erfasst wird und alle im ersten Bereich (5) erfassten Verkehrsteilnehmer (3) jeweils eine als sicher eingestufte Kombination aus Geschwindigkeit und Abstand zum Fahrzeug (1) aufweisen, und einen sicheren Spurwechsel zu verneinen, wenn sich zumindest ein Verkehrsteilnehmer (3) im ersten Bereich (5) befindet, der eine als unsicher eingestufte Kombination aus Geschwindigkeit und Abstand zum Fahrzeug (1) aufweist.

2. System nach Anspruch 1,
wobei die Recheneinheit (4) dazu ausgeführt ist, in dem Fall, dass zumindest ein Verkehrsteilnehmer (3) im zweiten Bereich (6) erfasst wird, einen sicheren Spurwechsel zu verneinen und erst dann wieder die Erkennung eines sicheren Spurwechsels zuzulassen, sobald dieser Verkehrsteilnehmer (3) den zweiten Bereich (6) verlassen hat und zu diesem Zeitpunkt alle im ersten Bereich (5) erfassten Verkehrsteilnehmer (3) jeweils eine als sicher eingestufte Kombination aus Geschwindigkeit und Abstand zum Fahrzeug (1) aufweisen.

3. System nach einem der vorhergehenden Ansprüche,
wobei die Recheneinheit (4) dazu ausgeführt ist, einen Verkehrsteilnehmer (3) im zweiten Bereich (6) lediglich aufgrund einer Bewegung des Verkehrsteilnehmers (3) als solchen zu erkennen, ohne dessen Geschwindigkeit zum Fahrzeug (1) zu ermitteln.

4. System nach einem der vorhergehenden Ansprüche,
wobei die Recheneinheit (4) dazu ausgeführt ist, bei einem erkannten sicheren Spurwechsel durch Ansteuerung einer Ausgabeeinheit des Systems keine Warnung an einen Fahrer des Fahrzeugs (1) auszugeben und/oder das automatische Einleiten eines Spurwechsels durchzuführen, und bei einem verneinten sicheren Spurwechsel eine Warnung an den Fahrer auszugeben und/oder das automatische Einleiten des Spurwechsels zu verhindern.

5. System nach Anspruch 4,
wobei die Warnung an den Fahrer des Fahrzeugs (1) mehrere Warnstufen umfasst, wobei die Recheneinheit (4) dazu ausgeführt ist, eine Warnstufe abhängig von der Einstufung eines Spurwechsels in sicher oder unsicher und abhängig von dem ermittelten Abstand eines Verkehrsteilnehmers (3) zum Fahrzeug (1) und/oder der ermittelten Geschwindigkeit des Verkehrsteilnehmers (3) zu ermitteln.

6. System nach einem der vorhergehenden Ansprüche,
wobei die Recheneinheit (4) dazu ausgeführt ist, eine jeweilige Abmessung zumindest eines sich im ersten Bereich (5) befindlichen jeweiligen Verkehrsteilnehmers (3) aus den Daten der Sensoreinheit (2) zu ermitteln, und die für einen sicheren Spurwechsel erforderliche Kombination aus Geschwindigkeit und Abstand an die jeweils ermittelte Abmessung dynamisch anzupassen.

7. System nach einem der vorhergehenden Ansprüche,
wobei der zweite Bereich (6) nahtlos an den ersten Bereich (5) angrenzt.

8. System nach einem der vorhergehenden Ansprüche,
wobei die Recheneinheit (4) dazu ausgeführt ist, abhängig von einem aktuellen Zustand eines vorgegebenen Situationsparameters eine Erstreckung des ersten Bereichs (5) und/oder eine Erstreckung des zweiten Bereichs (6) anzupassen.

9. System nach Anspruch 8,
wobei die Recheneinheit (4) dazu ausgeführt ist, eine Erstreckung des ersten Bereichs (5) wetterbedingt anzupassen.

10. System nach einem der vorhergehenden Ansprüche,
wobei die Recheneinheit (4) dazu ausgeführt ist, beim Befahren eines vorgegebenen Streckenabschnitts die Definition des zweiten Bereichs (6) zu verwerfen und bei der Überprüfung eines möglichen Spurwechsels auf Sicherheit lediglich den ersten Bereich (5) zu verwenden.

11. Fahrzeug (1) mit einem System nach einem der vorhergehenden Ansprüche.

## Claims

1. System for a vehicle (1), for checking a possible lane change for safety, which system comprises a sensor unit (2) and a computing unit (4), wherein the sensor unit (2) is designed to detect road users (3) and to transmit data from the detection to the computing unit (4), **characterized in that** the computing unit (4) is designed to assess, based on the data from the sensor unit (2), whether a relevant detected road user (3) is located in a first region (5) or in a second region (6), wherein the first region (5) is closer to the vehicle (1) than the second region (6) and both the first region (5) and the second region (6) are in a zone located counter to the direction of travel of the vehicle (1), and to determine a distance of the relevant road user (3) to the vehicle (1) and a speed of the relevant road user (3) when the detected road user (3) is located in the first region (5), and to identify a safe lane change when no road user (3) is detected in the second region (6) and all road users (3) detected in the first region (5) each have a combination of speed and distance to the vehicle (1) that is classified as safe, and to deny a safe lane change when at least one road user (3) is located in the first region (5) and has a combination of speed and distance to the vehicle (1) that is classified as unsafe.

2. System according to claim 1,
wherein the computing unit (4) is designed, in the case that at least one road user (3) is detected in the second region (6), to deny a safe lane change and to only allow the identification of a safe lane change again once this road user (3) has left the second region (6) and, at this time, all road users (3) detected in the first region (5) each have a combination of speed and distance to the vehicle (1) that is classified as safe.

3. System according to either of the preceding claims,
wherein the computing unit (4) is designed to only identify a road user (3) as such in the second region (6) on the basis of a movement of the road user (3), without determining the speed of the road user relative to the vehicle (1).

4. System according to any of the preceding claims,
wherein the computing unit (4) is designed, by controlling an output unit of the system, not to output a warning to a driver of the vehicle (1) and/or to carry out the automatic initiation of a lane change in the case of an identified safe lane change, and to output a warning to the driver and/or to prevent the automatic initiation of the lane change in the case of a denied safe lane change.

5. System according to claim 4,
wherein the warning to the driver of the vehicle (1) comprises a plurality of warning levels, wherein the computing unit (4) is designed to determine a warning level depending on the classification of a lane change as safe or unsafe and depending on the determined distance of a road user (3) to the vehicle (1) and/or the determined speed of the road user (3).

6. System according to any of the preceding claims,
wherein the computing unit (4) is designed to determine, from the data from the sensor unit (2), a relevant dimension of at least one relevant road user (3) located in the first region (5), and to dynamically adapt the combination of speed and distance required for a safe lane change to the relevant determined dimension.

7. System according to any of the preceding claims,
wherein the second region (6) seamlessly adjoins the first region (5).

8. System according to any of the preceding claims,
wherein the computing unit (4) is designed to adjust an extent of the first region (5) and/or an extent of the second region (6) depending on the current state of a specified situation parameter.

9. System according to claim 8,
wherein the computing unit (4) is designed to adjust an extent of the first region (5) according to the weather.

10. System according to any of the preceding claims,
wherein the computing unit (4) is designed to discard the definition of the second region (6) when traveling on a specified route portion and to use only the first region (5) when checking a possible lane change for safety.

11. Vehicle (1) comprising a system according to any of the preceding claims.

## Revendications

1. Système pour un véhicule (1), permettant de vérifier la sécurité d'un éventuel changement de voie, présentant une unité de capteur (2) et une unité de traitement (4), dans lequel l'unité de capteur (2) est conçue pour la détection d'usagers de la route (3) et pour la transmission de données issues de cette détection à l'unité de traitement (4), **caractérisé en ce que** l'unité de traitement (4) est conçue pour évaluer, sur la base des données de l'unité de capteur (2), si un usager de la route (3) détecté respectif se trouve dans une première zone (5) ou dans une seconde zone (6), dans lequel la première zone (5) est plus proche du véhicule (1) que la seconde zone (6) et tant la première zone (5) que la seconde zone (6) se situent dans une région se trouvant à l'opposé du sens de marche du véhicule (1), et pour déterminer une distance entre l'usager de la route (3) respectif et le véhicule (1) et une vitesse de l'usager de la route (3) respectif lorsque l'usager de la route (3) détecté se trouve dans la première zone (5), ainsi que pour reconnaître un changement de voie sûr lorsqu'aucun usager de la route (3) n'est détecté dans la seconde zone (6) et que tous les usagers de la route (3) détectés dans la première zone (5) présentent respectivement une combinaison jugée sûre de vitesse et de distance par rapport au véhicule (1), et pour refuser un changement de voie sûr lorsqu'au moins un usager de la route (3) qui présente une combinaison jugée non sûre de vitesse et de distance par rapport au véhicule (1) se trouve dans la première zone (5).

2. Système selon la revendication 1,
dans lequel l'unité de traitement (4) est conçue pour refuser, dans le cas où au moins un usager de la route (3) est détecté dans la seconde zone (6), un changement de voie sûr et pour n'autoriser à nouveau la reconnaissance d'un changement de voie sûr que lorsque cet usager de la route (3) a quitté la seconde zone (6) et qu'à ce moment-là, tous les usagers de la route (3) détectés dans la première zone (5) présentent respectivement une combinaison jugée sûre de vitesse et de distance par rapport au véhicule (1).

3. Système selon l'une des revendications précédentes, dans lequel l'unité de traitement (4) est conçue pour reconnaître un usager de la route (3) dans la seconde zone (6) uniquement sur la base d'un mouvement de l'usager de la route (3) en tant que tel, sans déterminer sa vitesse par rapport au véhicule (1).

4. Système selon l'une des revendications précédentes, dans lequel l'unité de traitement (4) est conçue, lorsqu'un changement de voie sûr est reconnu, pour ne pas émettre d'avertissement à l'intention d'un conducteur du véhicule (1) à travers la commande d'une unité de sortie du système et/ou pour déclencher automatiquement le changement de voie, et, en cas de changement de voie jugé non sûr, pour mettre un avertissement à l'intention du conducteur et/ou pour empêcher le déclenchement automatique du changement de voie.

5. Système selon la revendication 4,
dans lequel l'avertissement à l'intention du conducteur du véhicule (1) comprend plusieurs niveaux d'avertissement, dans lequel l'unité de traitement (4) est conçue pour déterminer un niveau d'avertissement en fonction de la classification d'un changement de voie comme sûr ou non sûr et en fonction de la distance déterminée entre un usager de la route (3) par rapport au véhicule (1) et/ou de la vitesse déterminée de l'usager de la route (3).

6. Système selon l'une des revendications précédentes, dans lequel l'unité de traitement (4) est conçue pour déterminer une dimension respective d'au moins un usager de la route (3) se trouvant dans la première zone (5) à partir des données fournies par l'unité de capteur (2), et pour adapter dynamiquement la combinaison de vitesse et de distance nécessaire à un changement de voie sûr à la dimension respectivement déterminée.

7. Système selon l'une des revendications précédentes, dans lequel la seconde zone (6) borde sans rupture la première zone (5).

8. Système selon l'une des revendications précédentes, dans lequel l'unité de traitement (4) est conçue pour adapter une étendue de la première zone (5) et/ou une étendue de la seconde zone (6) en fonction d'un état actuel d'un paramètre de situation prédéfini.

9. Système selon la revendication 8,
l'unité de traitement (4) est conçue pour adapter une étendue de la première zone (5) en fonction des conditions météorologiques.

10. Système selon l'une des revendications précédentes, dans lequel l'unité de traitement (4) est conçue, lors du parcours d'un tronçon prédéfini, pour rejeter la définition de la seconde zone (6) et, lors de la vérification de la sécurité d'un éventuel changement de voie, pour n'utiliser que la première zone (5).

11. Véhicule (1) comportant un système selon l'une des revendications précédentes.
